# EUROPEAN PATENT APPLICATION

(11) **EP 4 258 118 A1**
(43) Date of publication of application: **11.10.2023**
(21) Application number: 23166604.1
(22) Date of filing: 04.04.2023
(51) Int. Cl.: G06F 11/20, G06F 11/30

(54) **SWITCHOVER METHOD FOR ONBOARD REDUNDANCY SYSTEM, SYSTEM, VEHICLE AND STORAGE MEDIUM**

(30) Priority: 06.04.2022 CN 202210355138
(71) Applicant: Nio Technology (Anhui) Co., Ltd, Hefei City, Anhui 230611 (CN)
(72) Inventor: LUO, Jinhua, Hefei City, Anhui (CN)
(74) Representative: Vossius & Partner Patentanwälte Rechtsanwälte mbB

(57) **Abstract**

The disclosure relates to a switchover method for an onboard redundancy system, an onboard redundancy system, a vehicle, and a storage medium, where the onboard redundancy system includes a first system and a second system that are communicatively coupled with each other. The method includes the following steps: simultaneously executing, by the first system and the second system, an input instruction in response to receiving the input instruction, where the first system is a preset primary system and the second system is a preset secondary system; performing, by the first system and the second system, a health monitoring operation during execution of the instruction; and autonomously executing, by the first system and the second system, a primary/secondary device switchover based on a health monitoring result.

## Description

### Technical Field

The disclosure relates to the field of onboard system designs, and in particular, to a switchover method for an onboard redundancy system, an onboard redundancy system, a vehicle, and a storage medium.

### Background Art

At present, redundancy design solutions have been widely applied in industry, automobile, aviation, railway and other fields to improve the reliability of targets.

A common redundancy design at the chip level includes a dual-core lock-step technology, that is, two central processing units (CPUs) execute the same instruction, and their execution results are compared by using dedicated hardware to find errors. Redundancy systems in the prior art at the system level also require dedicated hardware to determine by comparison whether execution results of the systems are consistent. The redundancy design solution has very strict requirements on the time sequence and synchronization of execution time, and requires additional hardware devices for coordination, resulting in a high cost and a shortage of autonomous coordination capabilities.

### Summary

In order to solve or at least alleviate one or more of the above problems, the following technical solutions are provided.

According to an aspect of the disclosure, there is provided a switchover method for an onboard redundancy system, the onboard redundancy system including a first system and a second system that are communicatively coupled, where the method includes the following steps: A. simultaneously executing, by the first system and the second system, an input instruction in response to receiving the input instruction, where the first system is a preset primary system and the second system is a preset secondary system; B. performing, by the first system and the second system, a health monitoring operation during execution of the instruction; and C. autonomously executing, by the first system and the second system, a primary/secondary device switchover based on a health monitoring result.

As an alternative or addition to the above solution, the method according to an embodiment of the disclosure further includes: D. when the primary system is in a working state, only an execution result of the primary system is transmitted as an output instruction to a downstream system, without transmitting an execution result of the secondary system.

As an alternative or addition to the above solution, in the method according to an embodiment of the disclosure, step A includes: A1. receiving, by each of the first system and the second system, the same input instruction from an upstream system, and storing the input instruction in an instruction queue; and A2. executing, by each of the first system and the second system, the input instruction, and recording an execution status of the input instruction.

As an alternative or addition to the above solution, in the method according to an embodiment of the disclosure, the health monitoring operation includes autonomous health monitoring, and step B includes either or both of the following: B 1. monitoring, by a first health management module provided in the first system, an operating status of the first system in real time, and if an autonomous health monitoring result indicates that the system operates abnormally, immediately transmitting an abnormal result to the second system in a communication manner; and B2. monitoring, by a second health management module provided in the second system, an operating status of the second system in real time, and if an autonomous health monitoring result indicates that the system operates abnormally, immediately transmitting an abnormal result to the first system in a communication manner.

As an alternative or addition to the above solution, in the method according to an embodiment of the disclosure, the health monitoring operation includes inter-system heartbeat monitoring, and step B includes either or both of the following: B3. sending, by the first system, a heartbeat signal to the second system at a first frequency, continuously detecting a heartbeat response, and if the heartbeat response is not received within a first time period, determining that the second system operates abnormally; and B4. sending, by the second system, a heartbeat signal to the first system at a second frequency, continuously detecting a heartbeat response, and if the heartbeat response is not received within a second time period, determining that the first system operates abnormally.

As an alternative or addition to the above solution, in the method according to an embodiment of the disclosure, step C includes either or both of the following: C1. if the health monitoring result indicates that the first system is abnormal, switching the second system to be the primary system; and C2. if the health monitoring result indicates that the first system and/or the second system are/is abnormal, generating, by the onboard redundancy system, a first command for generating warning information or for an intelligent driving system to plan a parking route.

As an alternative or addition to the above solution, in the method according to an embodiment of the disclosure, in step C, if the second system is switched to be the primary system, either of the following operations is performed: continuing to execute, by the second system, a next instruction based on an instruction execution status recorded in the second system; and receiving, by the second system, an instruction execution status of the first system from the first system, and determining, at least based on the instruction execution status of the first system, an instruction to be executed next.

According to another aspect of the disclosure, there is provided an onboard redundancy system, including: a first system, where the first system is a preset primary system; and a second system, where the second system is a preset secondary system and communicatively coupled with the first system, where the first system and the second system are configured to: simultaneously execute an input instruction in response to receiving the input instruction; perform a health monitoring operation during execution of the instruction; and autonomously execute a primary/secondary device switchover based on a health monitoring result.

As an alternative or addition to the above solution, in the system according to an embodiment of the disclosure, when the primary system is in a working state, only an execution result of the primary system is transmitted as an output instruction to a downstream system, without transmitting an execution result of the secondary system.

As an alternative or addition to the above solution, in the system according to an embodiment of the disclosure, the simultaneously executing an input instruction includes: receiving, by each of the first system and the second system, the same input instruction from an upstream system, and storing the input instruction in an instruction queue; and executing, by each of the first system and the second system, the input instruction, and recording an instruction execution status of the input instruction.

As an alternative or addition to the above solution, in the system according to an embodiment of the disclosure, the health monitoring operation includes autonomous health monitoring, and the performing a health monitoring operation during execution of the instruction includes either or both of the following: monitoring, by a first health management module provided in the first system, an operating status of the first system in real time, and if an autonomous health monitoring result indicates that the first system operates abnormally, immediately transmitting the abnormal result to the second system in a communication manner; and monitoring, by a second health management module provided in the second system, an operating status of the second system in real time, and if an autonomous health monitoring result indicates that the second system operates abnormally, immediately transmitting an abnormal result to the first system in a communication manner.

As an alternative or addition to the above solution, in the system according to an embodiment of the disclosure, the health monitoring operation includes inter-system heartbeat monitoring, and the performing a health monitoring operation during execution of the instruction includes either or both of the following: sending, by the first system, a heartbeat signal to the second system at a first frequency, continuously detecting a heartbeat response, and if the heartbeat response is not received within a first time period, determining that the second system operates abnormally; and sending, by the second system, a heartbeat signal to the first system at a second frequency, continuously detecting a heartbeat response, and if the heartbeat response is not received within a second time period, determining that the first system operates abnormally.

As an alternative or addition to the above solution, in the system according to an embodiment of the disclosure, the autonomously executing a primary/secondary device switchover based on a health monitoring result includes either or both of the following: if the health monitoring result indicates that the first system is abnormal, switching the second system to be the primary system; and if the health monitoring result indicates that the first system and/or the second system are/is abnormal, generating, by the onboard redundancy system, a first command for generating warning information or for an intelligent driving system to plan a parking route.

As an alternative or addition to the above solution, in the system according to an embodiment of the disclosure, if the second system is switched to be the primary system, the second system is configured to perform either of the following operations: continuing to execute a next instruction based on an instruction execution status recorded in the second system; and receiving an instruction execution status of the first system from the first system, and determining, at least based on the instruction execution status of the first system, an instruction to be executed next.

According to still another aspect of the disclosure, there is provided a vehicle, including a system according to any one of the embodiments of an aspect of the disclosure.

According to yet another aspect of the disclosure, there is provided a computer storage medium, including instructions, where when the instructions are run, a method according to any one of the embodiments of an aspect of the disclosure is performed.

The subsystems (for example, the first system and the second system) in the onboard redundancy system according to one or more aspects of the disclosure can autonomously perform a health monitoring operation (for example, autonomous health monitoring of the subsystems and inter-system heartbeat monitoring) to monitor system faults (such as a breakdown and a severe internal error) and autonomously perform a primary/secondary device switchover, so that the use of an additional device (for example, a central coordination device) to determine by comparison whether outputs of the subsystems are consistent is avoided, thereby improving timeliness of fault detection and primary/secondary system switchover while reducing system costs, and meeting high real-time requirements of onboard intelligent systems.

In addition, the onboard redundancy system according to the disclosure has good architectural scalability, and can be added with new redundancy levels in a stacking manner without limitation, for example, similar redundancy design architectures are used in an upstream system and a downstream system.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the drawings:
FIG. 1 is a schematic flowchart of a switchover method 10 for an onboard redundancy system according to an embodiment of the disclosure; and
FIG. 2 is a schematic block diagram of an onboard redundancy system 20 according to an embodiment of the disclosure.

### Detailed Description of Embodiments

In this specification, the disclosure is described more fully with reference to the accompanying drawings in which schematic embodiments of the disclosure are illustrated. However, the disclosure may be implemented in different forms, and should not be construed as being limited to the embodiments provided herein. The embodiments provided herein are intended to make the disclosure of this specification full and complete, to convey the scope of protection of the disclosure more fully to those skilled in the art.

It should be noted that the terms such as "first" and "second" herein are intended to distinguish between similar objects, and do not necessarily describe a sequence of objects in terms of time, space, size, and the like. In addition, unless otherwise specified, the terms "including/comprising", "having", and similar expressions herein are intended to mean a non-exclusive inclusion.

In this specification, the term "vehicle" or another similar term herein include a general motor vehicle, such as a passenger vehicle (including a sport utility vehicle, a bus, a trucks, etc.), and various commercial vehicles, and include a hybrid vehicle, an electric vehicle, a plug-in hybrid electric vehicle, and the like. A hybrid vehicle is a vehicle with two or more power sources, such as a vehicle powered by a gasoline engine and an electric motor.

In this specification, the term "coupled" should be understood as including direct transmission of electrical energy or an electrical signal between two systems or units or indirect transmission of electrical energy or an electrical signal through one or more third systems or units.

Various exemplary embodiments according to the disclosure will be described below in detail with reference to the accompanying drawings.

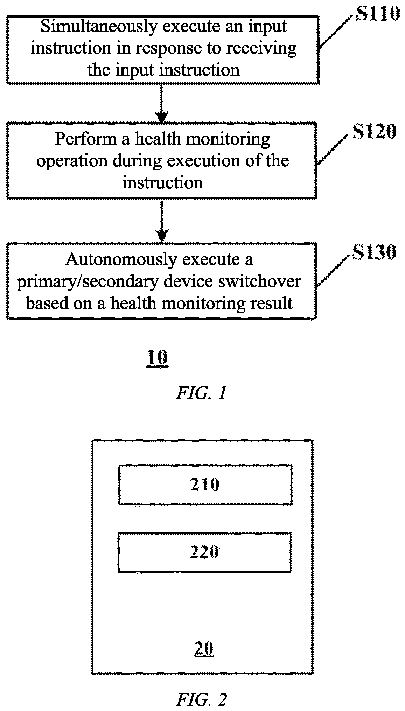

FIG. 1 is a schematic flowchart of a switchover method 10 for an onboard redundancy system according to an embodiment of the disclosure.

Exemplarily, the above onboard redundancy system may be one or a combination of the following: autonomous driving systems or advanced driver assistance systems (ADAS) such as an intelligent driving perception system, an intelligent driving decision-making system, and an intelligent driving execution system; intelligent cockpit systems such as an onboard infotainment system, a head-up display (HID) system, and a central control system; vehicle body control systems such as a passive start system (PEPS) system, and an air conditioning control system; and power control systems such as a power steering control system, a vehicle body stability control system, an airbag control system, and a suspension control system.

Exemplarily, the above onboard redundancy system may include a plurality of subsystems, for example, one primary system and two secondary systems. A specific number of subsystems is not limited in the disclosure, and it should be understood that the method 10 shown in FIG. 1 can be applied to an onboard redundancy system including any number of subsystems. For ease of understanding, various aspects of the disclosure are described herein by using an onboard redundancy system including two subsystems (that is, a first system used as a preset primary system and a second system used as a preset secondary system) as an example.

Exemplarily, the subsystems (for example, the first system and the second system) of the onboard redundancy system may be communicatively connected by using any one of the following: a controller area network (CAN) bus, an onboard local area network bus, a serial peripheral interface (SPI), a serial communication bus, shared memory, and socket.

As shown in FIG. 1, in step S110, the first system and the second system simultaneously execute an input instruction in response to receiving the input instruction. Optionally, each of the first system and the second system receives the same input instruction from an upstream system, and stores the received input instruction in a storage unit. Optionally, each of the first system and the second system executes the input instruction, and records an execution status of the input instruction.

Exemplarily, the input instruction may include a time stamp obtained when the input instruction is sent or received. Exemplarily, the input instruction may be stored in the storage unit of each of the first system and the second system in the form of a queue. Further, during execution of the instruction, each of the first system and the second system may record its execution status of the input instruction, for example, executed or not executed. Still further, each of the first system and the second system may scan all input instructions in the instruction queue during execution of the instruction, read an input instruction with the earliest time stamp from all the input instructions whose execution statuses are not executed, and execute the read instruction. Still further, each of the first system and the second system may periodically delete, from the instruction queue stored thereon, some input instructions with earlier time stamps and whose execution statuses are executed.

It should be noted that the disclosure does not limit the synchronization of instruction execution in the first system and the second system. In some embodiments, the first system and the second system may have different execution speeds. Therefore, instruction statuses in the instruction queues in the first system and the second system may also be different, for example, some instructions have been executed in the first system, but not executed in the second system, and vice versa.

Optionally, when the primary system is in a working state, only an execution result of the primary system is transmitted as an output instruction to a downstream system, without transmitting an execution result of the secondary system. Therefore, in step S 110, only the execution result of the first system that is used as the preset primary system is transmitted as an output instruction to the downstream system, without transmitting the execution result of the second system that is used as the preset secondary system.

In step S120, the first system and the second system perform a health monitoring operation during execution of the instruction. Optionally, the health monitoring operation may include autonomous health monitoring and/or inter-system heartbeat monitoring performed by the first system and the second system. It should be noted that, in this embodiment of the disclosure, the health monitoring operation performed by the onboard redundancy system does not need an external device (for example, an external central coordination device, or a global health management device), so as to improve timeliness of fault detection while reducing system costs.

Exemplarily, the first system and/or the second system may have an autonomous health monitoring function. The autonomous health monitoring function can be implemented by a health management module (for example, a health manager (HM)) provided in the system. In an embodiment, a first health management module provided in the first system monitors an operating status of the first system in real time, and if an autonomous health monitoring result indicates that the system operates abnormally (for example, has a severe internal fault), immediately transmits an abnormal result to the second system in a communication manner. In another embodiment, a second health management module provided in the second system monitors an operating status of the second system in real time, and if an autonomous health monitoring result indicates that the system operates abnormally, immediately transmits an abnormal result to the first system in a communication manner.

Exemplarily, the health monitoring operation described in step S120 may be inter-system heartbeat monitoring performed by the subsystems of the onboard redundancy system. The first system and the second system may monitor a health status of each other through a heartbeat mechanism, and a heartbeat frequency may be flexibly set, to effectively reduce memory usage of the heartbeat monitoring. In an embodiment, the first system may send a heartbeat signal to the second system at a first frequency, continuously detect a heartbeat response, and if the heartbeat response is not received within a first time period, determine that the second system operates abnormally. In another embodiment, the second system may send a heartbeat signal to the first system at a second frequency, continuously detect a heartbeat response, and if the heartbeat response is not received within a second time period, determine that the first system operates abnormally. Exemplarily, depending on real-time requirements of the system, the second frequency may be equal to or greater than the first frequency, so as to further improve timeliness of the primary system for fault detection compared to the secondary system. Similarly, depending on real-time requirements of the system, the second time period may be equal to or less than the first time period, so as to further improve timeliness of the primary system for fault detection compared to the secondary system.

It should be noted that, in this specification, the heartbeat signal and the heartbeat response refer to signals to be sent and received during inter-system heartbeat monitoring communication, and are used to determine whether the inter-system communication is in a normal state or an interrupted state. Exemplarily, the first system may send a first data packet (namely, a heartbeat signal) to the second system at the first frequency, and if the second system successfully receives the heartbeat data packet, the second system sends a second data packet (namely, a heartbeat response) to the first system; and if the first system successfully receives the second data packet within the first time period, it indicates that the communication between the first system and the second system is in a normal state (that is, the first system determines that the second system operates normally), or if the first system does not receive the second data packet within the first time period, it indicates that the communication between the first system and the second system is in an interrupted state (that is, the first system determines that the second system operates abnormally).

In step S130, the first system and the second system autonomously execute a primary/secondary device switchover based on a health monitoring result. Optionally, if the health monitoring result indicates that the first system is abnormal, the second system is switched to be the primary system. In an embodiment, if the autonomous health monitoring result of the first system indicates that the first system operates abnormally, an abnormal result is immediately transmitted to the second system in a communication manner and the second system is switched to be the primary system. In another embodiment, if the second system determines, based on inter-system heartbeat monitoring, that the first system operates abnormally, the second system is immediately switched to be the primary system. After the second system is switched to be the primary system, only the execution result of the second system is transmitted as an output instruction to the downstream system, and the execution result of the first system is no longer transmitted.

Optionally, if the health monitoring result indicates that the first system and/or the second system are/is abnormal, the onboard redundancy system (for example, another subsystem that is not abnormal) may generate a first command for generating warning information and giving a prompt for system abnormalities by using a prompt device (such as a warning light and a speaker) or for an intelligent driving system to plan a parking route.

Optionally, in step S130, if the second system is switched to be the primary system, the second system may continue to execute a next instruction based on an instruction execution status recorded in the second system. In other words, once a system switchover occurs, a new primary system does not need to consider an execution status of a previous primary system (for example, when the previous primary system has a breakdown), and only needs to continue to execute an unexecuted instruction in its instruction queue.

Optionally, in step S130, if the second system is switched to be the primary system, the second system may receive an instruction execution status of the first system from the first system, and determine, at least based on the instruction execution status of the first system, an instruction to be executed next. In other words, once a system switchover occurs, a new primary system needs to consider an execution status of a previous primary system. Exemplarily, after receiving the instruction execution status of the first system, the second system may determine, based on preset configuration information and the received instruction execution status of the first system, an instruction to be executed next. In an embodiment, if the preset configuration information indicates that instructions are not allowed to be repeated or lost, the second system may continue to execute an unexecuted instruction in the instruction queue of the first system.

FIG. 2 is a schematic block diagram of an onboard redundancy system 20 according to an embodiment of the disclosure. The system 20 shown in FIG. 2 includes a first system 210 that is used as a preset primary system and a second system 220 that is used as a preset secondary system. The system 20 shown in FIG. 2 may be configured to implement the method 10 shown in FIG. 1.

As mentioned above, the system 20 may include other subsystems in addition to the first system 210 and the second system 220, and a specific number of subsystems is not limited in the disclosure. For ease of understanding, various aspects of the disclosure are described by using the first system 210 and the second system 220 as examples.

The first system 210 and the second system 220 may be communicatively connected by using any one of the following: a controller area network (CAN) bus, an onboard local area network bus, a serial peripheral interface (SPI), a serial communication bus, shared memory, and socket.

The first system 210 and the second system 220 may be configured to simultaneously execute an input instruction in response to receiving the input instruction; perform a health monitoring operation during execution of the instruction; and autonomously execute a primary/secondary device switchover based on a health monitoring result. Optionally, each of the first system 210 and the second system 220 may be further configured to receive the same input instruction from an upstream system, and store the input instruction in an instruction queue; and record an instruction execution status of the input instruction. Optionally, the first system 210 and the second system 220 may be further configured to perform autonomous health monitoring as described above. Optionally, the first system 210 and the second system 220 may be further configured to perform inter-system heartbeat monitoring as described above. Optionally, that the first system 210 and the second system 220 may be further configured to autonomously execute a primary/secondary device switchover based on a health monitoring result includes either or both of the following: if the health monitoring result indicates that the first system is abnormal, switching the second system to be the primary system; and if the health monitoring result indicates that the first system and/or the second system are/is abnormal, generating, by the onboard redundancy system, a first command for generating warning information or for an intelligent driving system to plan a parking route. Optionally, if the second system 220 is switched to be the primary system, the second system 220 is configured to perform either of the following operations: continuing to execute a next instruction based on an instruction execution status recorded in the second system; and receiving an instruction execution status of the first system from the first system 210, and determining, at least based on the instruction execution status of the first system and/or preset configuration information, an instruction to be executed next.

According to another aspect of the disclosure, there is further provided a vehicle, including the system 20 shown in FIG. 2.

According to still another aspect of the disclosure, there is provided a computer storage medium including instructions, where when the instructions are run, the method 10 shown in FIG. 1 is performed. The computer-readable storage medium may include a random-access memory (RAM) such as a synchronous dynamic random-access memory (SDRAM), a read-only memory (ROM), a nonvolatile random-access memory (NVRAM), an electrically erasable programmable read-only memory (EEPROM), a flash memory, or another known storage medium.

The subsystems (for example, the first system and the second system) in the onboard redundancy system according to some embodiments of the disclosure can autonomously perform a health monitoring operation to monitor system faults and autonomously perform a primary/secondary device switchover, so that the use of an additional device to determine by comparison whether outputs of the subsystems are consistent is avoided, thereby improving timeliness of fault detection and primary/secondary system switchover while reducing system costs, and meeting high real-time requirements of onboard intelligent systems.

The onboard redundancy system according to some embodiments of the disclosure has architectural scalability, and can have additional redundancy levels in a stacking manner without limitation.

It should be understood that, some of the block diagrams shown in the accompanying drawings of the disclosure are functional entities and do not necessarily correspond to physically or logically independent entities. These functional entities may be implemented in the form of software, in one or more hardware modules or integrated circuits, or in different networks and/or processor apparatuses and/or micro-controller apparatuses.

It should also be understood that, in some alternative embodiments, the functions/steps included in the foregoing methods may not occur in the order shown in the flowchart. For example, two functions/steps shown in sequence may be executed substantially simultaneously or even in a reverse order. This specifically depends on the functions/steps involved.

In addition, those skilled in the art readily understand that the method provided in the one or more embodiments of the disclosure can be implemented by using a computer program. For example, when a computer storage medium (for example, a USB flash drive) storing the computer program is connected to a computer, the method in one or more embodiments of the disclosure can be performed by running the computer program.

Although only some implementations of the disclosure are described above, a person of ordinary skill in the art should understand that the disclosure may be implemented in multiple other forms without departing from the essence and scope of the disclosure. Accordingly, the presented examples and implementations are considered to be illustrative rather than restrictive, and the disclosure may encompass various modifications and replacements without departing from the spirit and scope of the disclosure that are defined by the appended claims.

## Claims

1. A switchover method for an onboard redundancy system including a first system and a second system that are communicatively coupled, the method comprising:
simultaneously executing, by the first system and the second system, an input instruction in response to receiving the input instruction, wherein the first system is a preset primary system and the second system is a preset secondary system;
performing, by the first system and the second system, a health monitoring operation during execution of the instruction; and
autonomously executing, by the first system and the second system, a switch between a primary device associated with the first system and a secondary device associated with the second system based on a health monitoring result.

2. The method according to claim 1, further comprising:
transmitting only an execution result of the primary system as an output instruction to a downstream system, without transmitting an execution result of the secondary system.

3. The method according to claim 1 or 2, wherein simultaneously executing an input instruction in response to receiving the input instruction further comprises:
receiving, by each of the first system and the second system, the same input instruction from an upstream system, and storing the input instruction in an instruction queue; and
executing, by each of the first system and the second system, the input instruction, and recording an execution status of the input instruction.

4. The method according to any one of claims 1 to 3, wherein the health monitoring operation comprises autonomous health monitoring, and wherein performing the health monitoring operation during execution of the instruction further comprises:
monitoring, by a first health management module provided in the first system, an operating status of the first system in real time, and
transmitting, to the second system, an autonomous health monitoring result indicating that the first system operates abnormally in a communication manner;
and/or
monitoring, by a second health management module provided in the second system, an operating status of the second system in real time, and
transmitting, to the first system, an autonomous health monitoring result indicating that the second system operates abnormally in a communication manner.

5. The method according to any one of claims 1 to 4, wherein the health monitoring operation comprises inter-system heartbeat monitoring, and wherein performing the health monitoring operation during execution of the instruction further comprises:
sending, by the first system, a heartbeat signal to the second system at a first frequency,
detecting, by the first system, a heartbeat response configured to be sent from the second system is not received within a first time period, and
determining, by the first system in response to detecting the heartbeat response is not received within the first time period, that the second system operates abnormally;
and/or
sending, by the second system, a heartbeat signal to the first system at a second frequency,
detecting, by the second system, a heartbeat response configured to be sent from the first system is not received within a second time period, and
determining, by the second system in response to detecting the heartbeat response is not received within the second time period, that the first system operates abnormally.

6. The method according to any one of claims 1 to 5, wherein autonomously executing a switch between a primary device associated with the first system and a secondary device associated with the second system based on a health monitoring result further comprises:
determining that the first system is abnormal based on the health monitoring result; and
switching the second system to be the primary system,
preferably, the method further comprising:
continuing to execute, by the second system, a next instruction based on an instruction execution status recorded in the second system; or
receiving, by the second system, an instruction execution status of the first system from the first system, and determining, at least based on the instruction execution status of the first system, an instruction to be executed next.

7. The method according to any one of claims 1 to 6, wherein autonomously executing a switch between a primary device associated with the first system and a secondary device associated with the second system based on a health monitoring result further comprises:
generating, by the onboard redundancy system, a first command for generating warning information or for an intelligent driving system to plan a parking route.

8. An onboard redundancy system, comprising:
a first system, wherein the first system is a preset primary system; and
a second system, wherein the second system is a preset secondary system and communicatively coupled with the first system, wherein the first system and the second system are configured to:
simultaneously execute an input instruction in response to receiving the input instruction;
perform a health monitoring operation during execution of the instruction; and
autonomously execute a switch between a primary device associated with the first system and a secondary device associated with the second system based on a health monitoring result.

9. The system according to claim 8, further comprising transmitting only an execution result of the primary system as an output instruction to a downstream system, without transmitting an execution result of the secondary system.

10. The system according to claim 8 or 9, wherein simultaneously executing an input instruction in response to receiving the input instruction further comprises:
receiving, by each of the first system and the second system, the same input instruction from an upstream system, and storing the input instruction in an instruction queue; and
executing, by each of the first system and the second system, the input instruction, and recording an instruction execution status of the input instruction.

11. The system according to any one of claims 8 to 10, wherein the health monitoring operation comprises autonomous health monitoring and the performing a health monitoring operation during execution of the instruction further comprises:
monitoring, by a first health management module provided in the first system, an operating status of the first system in real time, and
transmitting, to the second system, an autonomous health monitoring result indicates that the first system operates abnormally in a communication manner;
and/or
monitoring, by a second health management module provided in the second system, an operating status of the second system in real time, and
transmitting, to the first system, an autonomous health monitoring result indicates that the second system operates abnormally in a communication manner.

12. The system according to any one of claims 8 to 11, wherein the health monitoring operation comprises inter-system heartbeat monitoring, and wherein performing a health monitoring operation during execution of the instruction further comprises:
sending, by the first system, a heartbeat signal to the second system at a first frequency,
detecting, by the first system, a heartbeat response configured to be sent from the second system is not received within a first time period, and
determining, by the first system in response to detecting the heartbeat response is not received within the first time period, that the second system operates abnormally;
and/or
sending, by the second system, a heartbeat signal to the first system at a second frequency,
detecting, by the second system, a heartbeat response configured to be sent from the first system is not received within a second time period, and
determining, by the second system in response to detecting the heartbeat response is not received within the second time period, that the first system operates abnormally.

13. The system according to any one of claims 8 to 12, wherein autonomously executing a switch between a primary device associated with the first system and a secondary device associated with the second system based on a health monitoring result further comprises:
determining that the first system is abnormal based on the health monitoring result; and
switching the second system to be the primary system.

14. The system according to any one of claims 8 to 13, wherein autonomously executing a switch between a primary device associated with the first system and a secondary device associated with the second system based on a health monitoring result further comprises:
generating, by the onboard redundancy system, a first command for generating warning information or for an intelligent driving system to plan a parking route.

15. The system according to claim 13 or 14, further comprising:
continuing to execute, by the second system, a next instruction based on an instruction execution status recorded in the second system; or
receiving, by the second system, an instruction execution status of the first system from the first system, and determining, at least based on the instruction execution status of the first system, an instruction to be executed next.
